# EUROPEAN PATENT APPLICATION

(11) **EP 4 524 210 A1**
(43) Date of publication of application: **19.03.2025**
(21) Application number: 24199984.6
(22) Date of filing: 12.09.2024
(51) Int. Cl.: C09D 11/101, B41M 7/00, C09D 11/322, C09D 11/38

(54) **INKJET INK AND IMAGE FORMING METHOD**

(30) Priority: 13.09.2023 JP 2023148484; 13.09.2023 JP 2023148487
(71) Applicant: KONICA MINOLTA, INC., Tokyo 100-7015 (JP)
(72) Inventor: OMOTE, Chikage, Tokyo, 100-7015 (JP); IKEDA, Masashi, Tokyo, 100-7015 (JP); TAGUCHI, Yoshihito, Tokyo, 100-7015 (JP); IZAWA, Kouji, Tokyo, 100-7015 (JP); HOSAKA, Kenichiro, Tokyo, 100-7015 (JP)
(74) Representative: MFG Patentanwälte Meyer-Wildhagen Meggle-Freund Gerhard PartG mbB

(57) **Abstract**

An inkjet ink includes a gelling agent and a polymerizable compound that is polymerized by active rays, and the inkjet ink undergoes sol-gel phase transition by the gelling agent. The polymerizable compound includes a first polymerizable compound, wherein the first polymerizable compound includes a benzene ring and further includes one or more ethylene oxide groups and/or one or more propylene oxide groups in a molecule thereof, and the total number of the ethylene oxide groups and the propylene oxide groups is 2 or more; the content of the first polymerizable compound is more than 5% by mass based on the total mass of the inkjet ink; and the gelling agent is a compound that causes the ink to undergo a reversible sol-gel phase transition by a temperature change, and the gelling includes a hydrocarbon group having 22 or less carbon atoms.

## Description

### BACKGROUND OF THE INVENTION

### 1. Field of the Invention

The present invention relates to an inkjet ink and an image forming method.

### 2. Description of Related Art

Inkjet recording methods are used in various printing fields because images can be formed easily and inexpensively. As an ink used in an inkjet recording method, an inkjet ink that is cured by active rays (hereinafter, referred to as active ray curable inkjet ink) is known, which includes, as a liquid component, a polymerizable compound that is polymerized by active rays (hereinafter, referred to as active ray polymerizable compound). When the active ray curable inkjet ink is irradiated with active rays, the active ray curable inkjet ink is cured by polymerization of the active ray polymerizable compound to firmly attach the coloring material to the recording medium. By forming the cured film, a desired image can be formed.

It is known that a gelling agent is included in an active ray curable inkjet ink in order to suppress excessive wetting and spreading of liquid droplets after landing of the ink and to enhance pinning properties. The gelling agent can cause the ink to undergo a reversible sol-gel phase transition by a temperature change.

For example, Japanese Unexamined Patent Publication No. 2013-226745 discloses an active ray curable inkjet ink including a gelling agent including an alkyl chain having 12 or more carbon atoms, a photopolymerizable compound including a specific (meth)acrylate compound, and a photopolymerization initiator, and an image forming method using the same. Japanese Unexamined Patent Publication No. 2013-226745 describes that even when the content of the gelling agent in the ink is small, the ink can be subjected to a sol-gel phase transition, and the ejection stability and the curability of the ink can be improved.

In addition, WO2017/073654 discloses an active ray curable inkjet ink composition comprising a gelling agent such as an aliphatic ketone and an aliphatic ester each having a carbon chain of 12 or more carbon atoms, an amine-modified oligomer, pigments, and a polymer dispersing agent having a tertiary amine group. According to WO2017/073654, the above-described inkjet ink composition increases the degree of crosslinking of an ink cured film and suppresses the movement of a gelling agent, thereby suppressing blooming.

An active ray curable inkjet ink including a gelling agent is known, as in Japanese Unexamined Patent Publication No. 2013-226745 and WO2017/073654.

In an active ray curable ink including a gelling agent, the gelling agent is dissolved by heating the ink at the time of ejection, and then the gelling agent is crystallized by a decrease in liquid temperature at the time of ink landing to gelate the ink. The gelling agent is thus required to have high solubility in the ink at the time of heating in order to enhance the ejection property from the inkjet head.

Furthermore, according to the studies of the present inventors, the active ray curable inkjet ink described in Japanese Unexamined Patent Publication No. 2013-226745 and International Publication No. 2017/073654 could not be sufficiently gelled. In order to sufficiently enhance the pinning property of the ink, it is desirable that the ink is more sufficiently thickened by cooling after landing on a substrate (sufficiently enhancing the gelation property of the ink).

### SUMMARY OF THE INVENTION

The present invention has been made in consideration of the above-described circumstances, and an object thereof is to provide an inkjet ink capable of increasing the solubility of a gelling agent in the ink and sufficiently increasing the gelation property of the ink, and an image forming method using the inkjet ink.

To achieve at least one of the above-described objects, an inkjet ink reflecting one aspect of the present invention is as follows: an inkjet ink that is cured by an active ray, comprises a gelling agent and a polymerizable compound that is polymerized by the active ray, and undergoes sol-gel phase transition by the gelling agent, wherein: the polymerizable compound comprises a first polymerizable compound, wherein the first polymerizable compound includes a benzene ring and further includes one or more ethylene oxide groups and/or one or more propylene oxide groups in a molecule of the first polymerizable compound, and a total number of the ethylene oxide groups and the propylene oxide groups is 2 or more; a content of the first polymerizable compound is more than 5% by mass based on a total mass of the inkjet ink; and the gelling agent includes a linear or branched hydrocarbon group having 22 or less carbon atoms.

### BRIEF DESCRIPTION OF DRAWING

The advantageous and features provided by one or more embodiments of the invention will become more fully understood from the detailed description given hereinbelow and the appended drawings which are given by way of illustration only, and thus are not intended as a definition of the limits of the present invention:

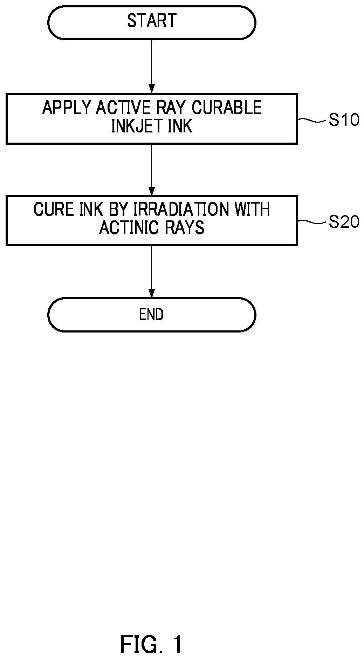

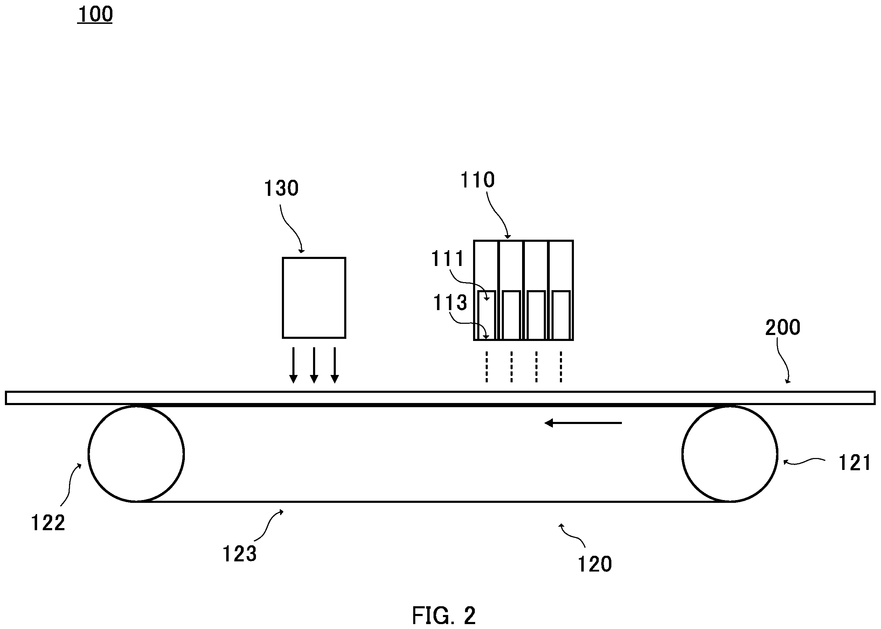

Fig. 1 is a flowchart illustrating an image forming method according to the present embodiment; and Fig. 2 is a schematic diagram illustrating a configuration of an image forming apparatus capable of performing the image forming method according to the exemplary embodiment.

### DESCRIPTION OF THE PREFERRED EMBODIMENTS

Hereinafter, one or more embodiments of the present invention will be described with reference to the drawings. However, the scope of the invention is not limited to the disclosed embodiments.

### 1. Inkjet Ink

In the present embodiment, the inkjet ink includes a polymerizable compound that is polymerized by active rays and a gelling agent taht includes a linear or branched hydrocarbon group having 22 or less carbon atoms. The active ray polymerizable compound includes a first polymerizable compound including a benzene ring and one or more ethylene oxide groups (hereinafter, each referred to as EO group) or one or more propylene oxide groups (hereinafter, each referred to as PO group) in a molecule of the first polymerizable compound, and the total number of the EO groups and the PO groups is 2 or more. The content of the first polymerizable compound is more than 5% by mass based on the total mass of the active ray curable inkjet ink. Note that the inkjet ink of the present invention is an inkjet ink curable by active rays.

The present inventors have found that, for an ink including the first polymerizable compound in a proportion of more than 5% by mass based on the total mass of the active ray curable inkjet ink, the use of the gelling agent can enhance the solubility of the gelling agent in the ink and sufficiently enhance the gelation property of the ink.

The gelling agent including a linear or branched hydrocarbon group having 22 or less carbon atoms has a melting point that is not excessively high, and thus tends to melt when the ink is heated.

It is considered that since the first polymerizable compound has a benzene ring in the molecule thereof, a CH/π interaction acts between a CH portion of the hydrocarbon group of the gelling agent and a π electron of the benzene ring of the first polymerizable compound. This is considered to increase the affinity between the gelling agent and the first polymerizable compound. As a result, the gelling agent and the first polymerizable compound are more likely to be compatible with each other.

For these reasons, it is considered that the solubility of the gelling agent can be increased.

However, when a gelling agent including a hydrocarbon group having 22 or less carbon atoms is used, the gelation property of the ink is not sufficiently enhanced. The reason therefor is considered to be s follows: when the number of carbon atoms of the hydrocarbon group is 22 or less, molecules of the active ray polymerizable compound are less likely to be incorporated into the crystal of the gelling agent when the gelling agent is crystallized.

On the other hand, the first polymerizable compound includes an EO group or a PO group in the molecule, and the total number of the groups is 2 or more, and therefore has high polarity and polarity close to that of the gelling agent. Due to the closeness in polarity to the gelling agent and the CH/π interaction, the molecules of the first polymerizable compound and the molecules of the gelling agent are more likely to approach each other. When the gelling agent is crystallized in this state, the active ray polymerizable compound is more likely to be incorporated and contained in the crystal of the gelling agent, and the mobility of the molecule of the active ray polymerizable compound is impaired, so that the ink is more likely to be thickened. As a result, it is considered that the gelation property of the ink is sufficiently enhanced. As a result of investigation by the present inventors, it has been found that the above effect is exhibited when the content of the first polymerizable compound is greater than 5% by mass based on the total mass of the active ray curable inkjet ink.

Hereinafter, the active ray curable inkjet ink of the present invention based on the above findings will be described in more detail.

### 1-1. Active Ray Polymerizable Compound

The active ray polymerizable compound is a compound which is polymerized and crosslinked by irradiation with actinic rays. Examples of the active ray polymerizable compound include a radically polymerizable compound and a cationically polymerizable compound. Among these, the active ray polymerizable compound is preferably a radically polymerizable compound.

Examples of the active rays include electron beams, ultraviolet rays, α-rays, γ-rays, and X-rays. Among these, ultraviolet rays and electron beams are preferable, and ultraviolet rays are more preferable.

As described above, the active ray polymerizable compound includes the first polymerizable compound, which includes a benzene ring and one or more EO groups or one or more PO groups in the molecule thereof, and the total number of the EO groups and the PO groups is 2 or more.

### 1-1-1. First Polymerizable Compound

Examples of the first polymerizable compound include radically polymerizable compounds and cationically polymerizable compounds. Among these, radically polymerizable compounds are preferable. The radically polymerizable compound is a compound having a radically polymerizable ethylenically unsaturated bond. The radically polymerizable compound may be included in the ink singly or in combination of two or more types thereof.

Examples of the first polymerizable compound as the radically polymerizable compound include unsaturated carboxylic acid ester and (meth)acrylate. Of these, (meth)acrylates are preferred. In the present specification, "(meth)acrylate" means acrylate or methacrylate, and "(meth)acrylic" means acrylic or methacrylic.

The number of benzene rings included in the molecule of the first polymerizable compound is preferably 1 or more and 5 or less, and more preferably 1 or more and 3 or less. When the number of benzene rings is 3 or less, an excessive increase in the viscosity of the ink due to an increase in the molecular weight can be suppressed.

The total number of EO groups and PO groups included in the molecule of the first polymerizable compound is 2 or more. The first polymerizable compound preferably includes a polymerizable compound in which the total number of EO groups and PO groups included in the molecule is 4 or more. The polymerizable compound in which the total number is 4 or more can more sufficiently increase the gelation property of the ink because the polarity is closer to that of a gelling agent. The upper limit value of the total number is not particularly limited, but is 20, for example. The content of the first polymerizable compound in which the total number of EO groups and PO groups is four or more is preferably 4.5% by mass or more, and more preferably 5.0% by mass or more, based on the total mass of the active ray curable inkjet ink. Thus, the gelation property of the ink can be further enhanced.

The first polymerizable compound preferably includes a polymerizable compound having two or more EO groups in the molecule, and more preferably includes a polymerizable compound having four or more EO groups in the molecule. Since the polymerizable compound including two or more EO groups in the molecule has a polarity closer to that of the gelling agent, the gelling agent and the active ray polymerizable compound can be easily compatibilized with each other at the time of heating the ink. This makes it possible to further increase the solubility of the gelling agent. The upper limit value of the number of the EO groups is not particularly limited, but is, for example, 20.

The first polymerizable compound preferably includes a polymerizable compound having a linear or branched hydrocarbon group in the molecule. Thus, the affinity between the first polymerizable compound and the hydrocarbon group of the gelling agent is further increased, and thus the solubility of the gelling agent is further increased. The hydrocarbon group is linear or branched, but is preferably linear.

The number of carbon atoms of the hydrocarbon group of the first polymerizable compound is preferably 3 or more and 25 or less and more preferably 6 or more and 19 or less.

The hydrocarbon group of the first polymerizable compound may be included at the end of the molecular chain, or may be included at another site (for example, between the EO group or the PO group and the benzene ring), but is preferably included at the end of the molecular chain. This is because it is considered that the gelation property can be enhanced by enhancing the affinity with the gelling agent.

The content of the first polymerizable compound including a hydrocarbon group is preferably 5% by mass or more and 40% by mass or less, more preferably 10% by mass or more and 30% by mass or less, based on the total mass of the active ray curable inkjet ink. When the content is 5% by mass or more, the affinity between the first polymerizable compound and the hydrocarbon group of the gelling agent is more sufficiently increased, and thus the solubility of the gelling agent is more sufficiently increased. When the content is 40% by mass or less, the pinning property can be further improved while sufficiently enhancing the solubility of the gelling agent.

The first polymerizable compound may be monofunctional or polyfunctional, but is preferably monofunctional. When the first polymerizable compound is a monofunctional polymerizable compound, the solubility of the gelling agent can be further increased, and the gelation property can be more sufficiently increased. The monofunctional first polymerizable compound is considered to have a polarity closer to that of the gelling agent. Thus, it is considered that the compatibility between the active ray polymerizable compound and the gelling agent is further enhanced, and the solubility of the gelling agent is further enhanced. In addition, it is considered that during the crystallization of the gelling agent, the molecules of the first polymerizable compound and the molecules of the gelling agent are more likely to come close to each other, and thus the gelation property is further enhanced.

The first polymerizable compound is, for example, a compound represented by General Formula (1).

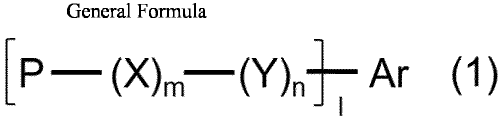

In General Formula (1), P represents a polymerizable group, X represents an ethylene oxide group, Y represents a propylene oxide group, and m and n are independently an integer of 0 or more and satisfy m + n ≥ 2. Note that the positions of X and Y may be switched. Furthermore, X and Y may each be arranged in a block form, or may be mixed and arranged in a random form. L is an integer of 1 or more. Further, Ar represents a structure including a substituted or unsubstituted benzene ring (the valence is 1).

In General Formula (1), P is a polymerizable group. Examples of the polymerizable group include a (meth) acryloyl group and a vinyl group. Among these, a (meth) acryloyl group is preferable.

In General Formula (1), Ar represents a structure including a substituted or unsubstituted benzene ring having a valence of (1). When the benzene ring has a substituent, examples of the substituent include a linear or branched hydrocarbon group, a phenyl group, and a hydroxy group. Among these, a linear or branched hydrocarbon group is preferable from the viewpoint of further increasing the solubility of the gelling agent by further increasing the affinity between the first polymerizable compound and the gelling agent. The hydrocarbon group is preferably straight-chain.

In General Formula (1), m and n are integers of 0 or more, and satisfy m + n ≥ 2. The combination of m and n is not particularly limited as long as m + n ≥ 2 is satisfied, but when m is 2 or more, n is preferably 0. Furthermore, when n is 2 or more, m is preferably 0. From the viewpoint of more sufficiently enhancing the gelation property of the ink, m + n is preferably 4 or more.

L is an integer of 1 or more, and is preferably 1 or more and 2 or less.

In General Formula (1), m is preferably 2 or more, and more preferably 4 or more. This makes it possible to further increase the solubility of the gelling agent.

Specific examples of the monofunctional first polymerizable compound include EO- or PO-modified products of benzyl acrylate, phenol acrylate, nonylphenol acrylate and the like.

Specific examples of the polyfunctional first polymerizable compound include EO- or PO-modified products such as bisphenol A diacrylate and the like.

The content of the first polymerizable compound is more than 5% by mass based on the total mass of the active ray curable inkjet ink. The content is preferably more than 5% by mass and 40% by mass or less, more preferably 10% by mass or more and 30% by mass or less. When the content is 40% by mass or less, the pinning property can be further improved while sufficiently enhancing the solubility of the gelling agent.

The content of the first polymerizable compound is preferably 5% by mass or more and 50% by mass or less, more preferably 10% by mass or more and 35% by mass or less, based on the total mass of the active ray polymerizable compounds.

### 1-1-2. Second Polymerizable Compound

In the present embodiment, the active ray polymerizable compound may include a second polymerizable compound that is a polymerizable compound other than the first polymerizable compound.

Examples of the second polymerizable compound include radically polymerizable compounds and cationically polymerizable compounds. Among these, radically polymerizable compounds are preferable.

Examples of the radically polymerizable compound include unsaturated carboxylic acid esters and (meth)acrylates. Of these, (meth)acrylates are preferred. The (meth)acrylate may be monofunctional or polyfunctional.

Examples of the monofunctional (meth)acrylate include isoamyl acrylate, stearyl acrylate, lauryl acrylate, octyl acrylate, decyl acrylate, isomyristyl acrylate, isostearyl acrylate, 2-ethylhexyl-diglycol acrylate, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, 2-hydroxy-3-phenoxypropyl acrylate, cumylphenoxyethyl acrylate, tetrahydrofurfuryl acrylate, isobornyl acrylate, 2-hydroxyethyl acrylate, 2-hydroxypropyl acrylate, 2-hydroxybutyl acrylate, and t-butylcyclohexyl acrylate.

Examples of the bifunctional (meth)acrylate include triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, hydroxypivalic neopentyl glycol di(meth)acrylate, polytetramethylene glycol di(meth)acrylate, and tricyclodecane dimethanol di(meth)acrylate.

Examples of the (meth)acrylate having three or more functional groups include trimethylolpropane tri(meth)acrylate, pentaerythritol tri(meth)acrylate, pentaerythritol tetra(meth)acrylate, dipentaerythritol hexa (meth)acrylate, ditrimethylolpropane tetra(meth)acrylate, glycerolpropoxy tri(meth)acrylate, and pentaerythritol ethoxy tetra(meth)acrylate.

The second polymerizable compound as a (meth)acrylate may be, for example, a compound modified with an alkylene oxide such as ethylene oxide (EO) or propylene oxide (PO), or caprolactone (modified (meth)acrylate). At this time, when the (meth)acrylate includes a benzene ring, the total number of modification with EO or PO is 1.

Examples of the cationically polymerizable compound include an epoxy compound, a vinyl ether compound, and an oxetane compound.

Examples of the epoxy compound include 3,4-epoxycyclohexylmethyl-3',4'-epoxycyclohexanecarboxylate, bis(3,4-epoxycyclohexylmethyl) adipate, vinylcyclohexene monoepoxide, ε-caprolactone-modified 3,4-epoxycyclohexylmethyl 3', 4'-epoxycyclohexanecarboxylate, 1-methyl-4-(2-methyloxiranyl)-7-oxabicyclo [4, 1, 0] heptanes, 2-(3,4-epoxycyclohexyl-5,5-spiro- 3,4-epoxy) cyclohexanone-meta-dioxane and bis(2,3-epoxycyclopentyl) ether, diglycidyl ether of 1,4-butanediol, diglycidyl ether of 1,6-hexanediol, triglycidyl ether of glycerin, triglycidyl ether of trimethylolpropane, diglycidyl ether of polyethylene glycol, diglycidyl ether of propyleneglycol, diglycidyl ether of ethylene glycol, propyleneglycol, and diglycidyl ether of glycerin.

Examples of the vinyl ether compound include monovinyl ether compounds such as ethyl vinyl ether, N-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, N-propyl vinyl ether, isopropyl vinyl ether, isopropenyl ether-o-propylene carbonate, dodecyl vinyl ether, diethylene glycol monovinyl ether, and octadecyl vinyl ether; and di-or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

Examples of the oxetane compound include 3-hydroxymethyl-3-methyloxetane, 3-hydroxymethyl-3-ethyloxetane, 3-hydroxymethyl-3-propyloxetane, 3-hydroxymethyl-3-n-butyloxetane, 3-hydroxymethyl-3-benzyloxetane, 3-hydroxyethyl-3-methyloxetane, 3-hydroxyethyl-3-ethyloxetane, 3-hydroxyethyl-3-propyloxetane, 3-hydroxypropyl-3-methyloxetane, 3-hydroxypropyl-3-ethyloxetane, 3-hydroxypropyl-3-propyloxetane, 3-hydroxybutyl-3-methyloxetane, 1, 4 bis{[(3-ethyl-3-oxetanyl) methoxy] methyl} benzene, 3-ethyl-3-(2-ethylhexyloxymethyl) oxetane, and di [1-ethyl (3-oxetanyl)] methyl ether.

The content of the second polymerizable compound is preferably 45% by mass or more and 86% by mass or less and more preferably 55% by mass or more and 81% by mass or less based on the total mass of the active ray curable inkjet ink.

The content of the active ray polymerizable compound can be set to 1% by mass or more and 97% by mass or less based on the total mass of the active ray curable inkjet ink, and is preferably 30% by mass or more and 95% by mass or less, more preferably 50% by mass or more and 95% by mass or less, and even more preferably 70% by mass or more and 95% by mass or less.

### 1-2. Gelling Agent

In the present embodiment, the active ray curable inkjet ink undergoes sol-gel phase transition (before irradiation with active rays) due to the gelling agent. Specifically, the gelling agent refers to a compound that dissolves in an active ray polymerizable compound included in an ink when the ink including the gelling agents is heated (e.g., at 90°C), and crystallizes in the ink at around normal temperature (e.g., 35°C) to gelate the ink.

In the present embodiment, the gelling agent includes a linear or branched hydrocarbon group having 22 or less carbon atoms. The hydrocarbon group is preferably straight-chain. As a result, steric hindrance is less likely to occur at the time of crystallization of the gelling agent, and the gelling agent is more likely to approach the molecule of the active ray polymerizable compound. As a result, the crystals of the gelling agent easily contain the active ray polymerizable compound, and thus the gelation property can be further enhanced. The number of carbon atoms is preferably 20 or less, and more preferably 18 or less. The lower limit of the number of carbon atoms is preferably 14 from the viewpoint of facilitating containment of the active ray polymerizable compound in the crystal of the gelling agent.

In the case where the gelling agent includes a plurality of hydrocarbon groups in the molecule thereof, the number of hydrocarbon groups is preferably two or more, more preferably three or more, and further preferably all the hydrocarbon groups in the molecule have 22 or less carbon atoms.

The gelling agent is preferably crystallized in the ink to form a structure in which the active ray polymerizable compound is contained in a three dimensional space formed by the gelling agent crystallized into a plate shape (such a structure is hereinafter referred to as "card house structure"). When the card house structure is formed, the liquid active ray polymerizable compound is held in the space, so that the gelation property of the ink is further enhanced. Thus, dots formed by adhesion of the ink to a recording medium are less likely to wet-spread, enhancing the pinning property of the ink.

Examples of the gelling agent capable of more easily forming a card-house structure by crystallization include aliphatic ketones, aliphatic esters, glycerol-based compounds, pentaerythritol-based compounds, petroleum-based waxes, plant-based waxes, animal-based waxes, mineral-based waxes, hydrogenated castor oil, modified waxes, higher fatty acids, higher alcohols, hydroxystearic acid, fatty acid amides including N-substituted fatty acid amides and special fatty acid amides, higher amines, sucrose fatty acid esters, synthetic waxes, dibenzylidene sorbitol, dimer acids, and dimer diols.

Among these, the gelling agent is preferably aliphatic ketones, aliphatic esters, glycerol-based compounds, pentaerythritol-based compounds, higher fatty acids, and higher alcohols, from the viewpoint of increasing the polarity to further increase the solubility in the active ray polymerizable compound. In addition, aliphatic ketones, aliphatic esters, glycerol-based compounds, and pentaerythritol-based compounds are more preferable, and aliphatic ketones, aliphatic esters, and pentaerythritol-based compounds are still more preferable. Further, from the viewpoint of more sufficiently enhancing the gelation property of the ink, among these, aliphatic ketone and aliphatic ester are more preferable, and aliphatic ester is particularly preferable. Note that only one gelling agent may be included, or two or more gelling agents may be included in combination.

Examples of the aliphatic ketone include dibehenyl ketone, distearyl ketone, dieicosyl ketone, dipalmityl ketone, dilauryl ketone, dimyristyl ketone, myristyl palmityl ketone, and palmityl stearyl ketone.

Examples of the aliphatic esters include fatty acid esters of monoalcohols such as behenyl behenate, icosyl icosanoate, stearyl stearate, palmityl stearate, myristyl myristate, cetyl myristate, and oleyl palmitate. Also included are fatty acid esters of polyhydric alcohols, such as sorbitan fatty acid esters, propylene glycol fatty acid esters, ethylene glycol fatty acid esters, and polyoxyethylene fatty acid esters.

Examples of the glycerol-based compound include glycerin monolaurate, diglycerin monopalmitate, diglycerin monopalmitate, diglycerin monostearate, diglycerin monooleate, diglycerin monobehenate, and the like. Note that in the present specification, a "glycerol-based compound" refers to a compound having a structure derived from glycerol.

Examples of the pentaerythritol-based compound include pentaerythritol tetrastearate, pentaerythritol monooleate, pentaerythritol tetrapalmitate, and pentaerythritol trimyristate. Note that in the present specification, the "pentaerythritol-based compound" refers to a compound having a structure derived from pentaerythritol.

Examples of the higher fatty acid include behenic acid, arachidic acid, stearic acid, palmitic acid, myristic acid, lauric acid, oleic acid, and erucic acid.

Examples of the higher alcohol include stearyl alcohol and behenyl alcohol.

Among the aliphatic ketone and the aliphatic ester, from the viewpoint of further enhancing the gelation property, the aliphatic ketone represented by the following General Formula (G1) or the aliphatic ester represented by the following General Formula (G2) is more preferable.

### General formula (G1): Rₐ-CO-R_{b}

### General formula (G2): R_{c}-COO-R_{d}

In General Formula (G1), Rₐ and R_{b} independently represent a linear hydrocarbon group having 14 or more and 22 or less carbon atoms, and in General Formula (G2), R_{c} and R_{d} independently represent a linear hydrocarbon group having 14 or more and 22 or less carbon atoms.

In General Formulae (G1) and (G2), when the number of carbon atoms of Rₐ to R_{d} is 14 or more, the crystallinity of the gelling agent represented by General Formula (G1) and General Formula (G2) is further enhanced, and a more sufficient space is generated in the card house structure. Therefore, the active ray polymerizable compound (A) is more likely to be sufficiently contained in the space, and the gelation property and the pinning property of the ink are further improved.

In addition, when the number of carbon atoms of Rₐ to R_{d} is 22 or less, the melting points of the gelling agent represented by General Formula (G1) and General Formula (G2) do not excessively increase, and the solubility of the gelling agent increases.

Examples of the aliphatic ketone represented by the general formula (G1) include dibehenyl ketone (21-22 carbon atoms), distearyl ketone (17-18 carbon atoms), dieicosyl ketone (19-20 carbon atoms), dipalmityl ketone (15-16 carbon atoms), dimyristyl ketone (13-14 carbon atoms), dilauryl ketone (11-12 carbon atoms), lauryl myristyl ketone (11-14 carbon atoms), lauryl palmityl ketone (11-16 carbon atoms), myristyl palmityl ketone (13-16 carbon atoms), myristyl stearyl ketone (13-18 carbon atoms), myristyl behenyl ketone (13-22 carbon atoms), palmityl stearyl ketone (15-18 carbon atoms), valmityl behenyl ketone (15-22 carbon atoms), and stearyl behenyl ketone (17-22 carbon atoms). The number of carbon atoms in the above parentheses represents the number of carbon atoms of each of two hydrocarbon groups separated by a carbonyl group.

Examples of the aliphatic ester represented by General Formula (G2) include behenyl behenate (21-22 carbon atoms), icosyl icosanoate (19-20 carbon atoms), stearyl stearate (17-18 carbon atoms), palmityl stearate (17-16 carbon atoms), lauryl stearate (17-12 carbon atoms), cetyl palmitate (15-16 carbon atoms), stearyl palmitate (15-18 carbon atoms), myristyl myristate (13-14 carbon atoms), cetyl myristate (13-16 carbon atoms), octyldodecyl myristate (13-20 carbon atoms), stearyl oleate (17-18 carbon atoms), stearyl erucate (21-18 carbon atoms), stearyl linoleate (17-18 carbon atoms), behenyl oleate (18-22 carbon atoms), and arachidyl linoleate (17-20 carbon atoms). The number of carbon atoms in the above parentheses represents the number of carbon atoms of each of the two hydrocarbon groups separated by the ester group.

The content of the gelling agent is preferably 0.5% by mass or more and 10.0% by mass or less, more preferably 2.0% by mass or more and 7.0% by mass or less, based on the total mass of the active ray curable inkjet ink. When the content is 0.5% by mass or more, the gelation property of the ink can be further enhanced. In addition, when the content is 10.0% by mass or less, the solubility of a gelling agent in an active ray polymerizable compound can be further increased.

The HSP distance between the gelling agent and the active ray polymerizable compound is preferably 5.0 (MPa)^{1/2} or more, and 7.0 (MPa)^{1/2} or less, and more preferably 5.5 (MPa)^{1/2} or more, and 6.0 (MPa)^{1/2} or less. When the HSP distance is 5.0 (MPa)^{1/2} or more, the gelling agent is more likely to be crystallized at the time of ink landing, and the gelation property of the ink is further enhanced. When the HSP distance is 7.0 (MPa)^{1/2} or less, the solubility of the gelling agent is further enhanced. Note that each component value of the HSP value of the gelling agent and each component value of the HSP value of the active ray polymerizable compound, which are used for the calculation of the HSP distance, are values obtained by weighted averaging for each gelling agent and each active ray polymerizable compound. The respective components of the HSP value are calculated by computer software HSPiP (version 5. 4. 01, manufactured by TEGARA Corporation).

Note that in the present embodiment, a small amount of a gelling agent that does not include a linear hydrocarbon group having 22 or less carbon atoms may be included within a range in which the effect of the present invention is exhibited.

### 1-3. Others

The active ray curable inkjet ink composition according to the present embodiment may further contain other components, such as a colorant, a surfactant, a polymerization inhibitor, and a humectant, to the extent that the effects of the present invention are exhibited.

### (Coloring agent)

The colorant is a dye or a pigment, but a pigment is preferable because it has good dispersibility in constituent components of the ink and is excellent in weather resistance. The pigments may be selected from, for example, yellow pigment, red pigment, blue pigment, black pigment and white pigment according to a color or the like of an image to be formed.

Examples of yellow pigments include Pigment Yellow (PY) 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193. Among these, PY185 and PY150 are preferable from the viewpoint of further reducing the amount of impurities in the ink composition and further increasing the electrical resistance value of the insulating film.

Examples of red pigments include Pigment Red (PR) 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 202, 208, 216, 226, 257, Pigment Violet (PV) 3, 19, 23, 29, 30, 37, 50, 88, Pigment Orange (PO) 13, 16, 20, 36, and the like. Among these, from the viewpoint of further reducing the impurity amount in the ink composition and further increasing the electric resistance value of the insulating film, PR122 and PV19 are preferable.

Examples of blue pigments include Pigment Blue (PB) 1, 15, 15:1, 15:2, 15:3, 15:4, 15:6, 16, 17:1, 22, 27, 28, 29, 36, 60, and the like. Among these, PB15:3 and PB15:4 are preferable from the viewpoint of further reducing the impurity amount in the ink composition and further increasing the electric resistance value of the insulating film.

Examples of black pigments include C. I. Pigment Black (hereinafter also simply referred to as "PBk") 7, PBk26, and PBk28.

The white pigment may be any pigment that imparts a white color to a cured film of the white ink. Examples of the white pigment include inorganic pigments such as titanium oxide, zinc oxide, calcium carbonate, barium sulfate, and aluminum hydroxide. Among these, titanium oxide is preferable.

The crystal form of the titanium oxide may be any of a rutile type, an anatase type, and a brookite type, but from the viewpoint of making it easier to make the particle diameter of the white pigment smaller, the anatase type having a small specific gravity is preferable, and from the viewpoint of further enhancing the opacity of an image to be formed, the rutile type having a large refractive index in the visible light region is preferable.

The content of the colorant is preferably 0.1 % by mass or more and 10% by mass or less and more preferably 1% by mass or more and 5% by mass or less based on the total mass of the ink composition. The content of the white pigment is preferably 3% by mass or more and 8% by mass or less.

### (Pigment dispersing agent)

The active ray curable ink may contain a pigment dispersing agent for dispersing a pigment. Examples of the pigment dispersing agent include hydroxyl group-containing carboxylic acid ester, salt of long-chain polyaminoamide and high-molecular-weight acid ester, salt of high-molecular-weight polycarboxylic acid, salt of long-chain polyaminoamide and polar acid ester, high-molecular-weight unsaturated acid ester, high-molecular-weight copolymer, modified polyurethane, modified polyacrylate, polyether ester-type anionic surfactant, naphthalenesulfonic acid-formalin condensate salt, aromatic sulfonic acid-formalin condensate salt, polyoxyethylene alkyl phosphate ester, polyoxyethylene nonylphenyl ether, and stearylamine acetate.

The content of the pigment dispersing agent is preferably 10% by mass or more and 200% by mass or less, more preferably 20% by mass or more and 100% by mass or less, based on the total mass of the pigment. When the content of the dispersing agent is 10% by mass or more based on the total mass of the pigment, the dispersion stability of the pigment is enhanced. When the content of the dispersing agent is 200% by mass or less based on the total mass of the pigment, the ejection property of the ink from an inkjet head is readily stabilized.

### (Actinic ray polymerization initiator)

In the present embodiment, the active ray curable inkjet ink may include an active ray polymerization initiator (hereinafter simply referred to as "polymerization initiator"). The polymerization initiator may be any polymerization initiator that can initiate polymerization of the active ray polymerizable compound described above upon irradiation with active rays. For example, when the active ray curable inkjet ink includes a radically polymerizable compound, the polymerization initiator can be a radical polymerization initiator. When the active ray curable ink includes a cationically polymerizable compound, the polymerization initiator can be a cationic polymerization initiator (photoacid generator). Note that when the active ray curable inkjet ink can be sufficiently cured without a polymerization initiator, such as when the active ray curable inkjet ink is cured by irradiation with an electron beam, no polymerization initiator is required.

The radical polymerization initiator includes an intramolecular bond cleavage type radical polymerization initiator and an intramolecular hydrogen abstraction type radical polymerization initiator.

Examples of the intramolecular bond cleavage type radical polymerization initiator include acetophenone-based initiators such as diethoxyacetophenone, 2-hydroxy-2-methyl-1-phenylpropan-1-one, benzyldimethylketal, 1-(4-isopropylphenyl)-2-hydroxy-2-methylpropan-1-one, 4-(2-hydroxyethoxy) phenyl-(2-hydroxy-2-propyl) ketone, 1-hydroxycyclohexyl-phenylketone, 2-methyl-2-morpholino (4-methylthiophenyl) propan-1-one, and 2-benzyl-2-dimethylamino-1-(4-morpholinophenyl)-butanone, benzoins such as benzoin, benzoin methyl ether, and benzoin isopropyl ether, acylphosphine oxide-based initiators such as 2,4,6-trimethylbenzoin diphenylphosphine oxides, benzyl, and methylphenyl glyoxy esters.

Examples of the intramolecular hydrogen-abstraction type radical polymerization initiator include benzophenone-based initiators such as benzophenon, methyl o-benzoylbenzoate, 4-phenylbenzophenone, 4,4'-dichlorobenzophenone, hydroxybenzophenone, 4-benzoyl-4'-methyl-diphenyl sulfide, acrylated benzophenon, 3, 3', 4, 4'-tetra (t-butylperoxycarbonyl) benzophenon and 3,3'-dimethyl-4-methoxybenzophenone, thioxanthone-based initiators such as 2-isopropylthioxanthone, 2,4-dimethylthioxanthone, 2,4-diethylthioxanthone and 2,4-dichlorothioxanthone, aminobenzophenone-based initiators such as Michler's ketone and 4,4'-diethylaminobenzophenone, 10-butyl-2-chloroacridone, 2-ethylanthraquinone, 9,10-phenanthrenequinone, and camphorquinone.

Examples of the cationic polymerization initiator include a photoacid generator. Examples of the photoacid generator include aromatic onium compounds B(C₆F₅)₄⁻, PF₆⁻, AsF₆, SbF₆⁻, CF₃SO₃⁻ salts which generate sulfonic acids, halides which photogenerate hydrogen halides, and iron-allene complexes.

The content of the polymerization initiator is not particularly limited as long as it is within a range in which the active ray curable inkjet ink is sufficiently cured by irradiation with active rays (e.g., ultraviolet rays) and the coatability onto the surface of a recording medium is not reduced. For example, the content of the polymerization initiator is preferably 0.1% by mass or more and 20% by mass or less, more preferably 1% by mass or more and 10% by mass or less based on the total mass of the active ray curable inkjet ink.

### (Polymerization inhibitor)

In the present embodiment, the active ray curable inkjet ink may contain a polymerization inhibitor.

Examples of the polymerization inhibitor include alkyl phenols, hydroquinones, catechol, resorcinol, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3--dimethylbutylidene) anilineoxide, dibutylcresol, cyclohexanoneoximecresol, guaiacol, o-isopropylphenol, butyraldoxime, methylethylketoxime, cyclohexanoneoxime and the like.

The content of the polymerization inhibitor is not particularly limited, but is preferably 0.05% by mass or more and 10.00% by mass or less based on the total mass of the active ray curable inkjet ink.

### (Surfactant)

In the present embodiment, the active ray curable inkjet ink may contain a surfactant for adjusting the surface tension.

Examples of the surfactant include anionic surfactants including dialkylsulfosuccinates, alkylnaphthalenesulfonates, and fatty acid salts, nonionic surfactants including polyoxyethylene alkyl ethers, polyoxyethylene alkyl allyl ethers, acetylene glycols, and polyoxyethylene-polyoxypropylene block copolymers, cationic surfactants including alkylamine salts and quaternary ammonium salts, silicone-based surfactants, and fluorine-based surfactants.

The content of the surfactant is not particularly limited, but is preferably 0.001% by mass or more and 10% by mass or less, more preferably 0.001% by mass or more and 1.0% by mass or less, based on the total mass of the active ray curable inkjet ink.

In the present embodiment, the active ray curable inkjet ink may contain, in addition to the above-described components, a fixing resin, a viscosity modifier, a specific resistance modifier, a film forming agent, a UV absorber, an antioxidant, a fading inhibitor, a fungicide, a rust inhibitor, and the like, as necessary.

### 1-4. Physical Properties of Active Ray Curable Inkjet Ink

The viscosity of the active ray curable ink at 80°C is preferably 3 mPa·s or more and 20 mPa·s or less, more preferably 5 mPa s or more and 15 mPa·s or less. Thus, in the inkjet head, it is possible to improve the ejection property when the ink is heated and ejected.

The viscosity can be measured by a rheometer. For example, the pre-coating agent is heated to 100°C, and the ink is cooled to 20°C under conditions of a shearing rate of 11.7 (1/s) and a temperature lowering rate of 0.1°C/s while measuring the viscosity with a stress-control-type rheometer (manufactured by AntonPaar GmbH, Physica MCR301 (75mm cone plate diameter, cone angle of 1.0 °)), to obtain a temperature change curve of viscosity. The viscosity can be determined by reading the viscosity at 80°C from the obtained temperature change curve.

### 1-5. Method for Preparing Active Ray Curable Inkjet Ink

The active ray curable inkjet ink can be prepared by mixing the above-described active ray polymerizable compound, the gelling agent, and optional other components under heating. At this time, the obtained mixed liquid is preferably filtered through a filter. Note that when an ink including a pigment is prepared, it is preferable to prepare a pigment dispersion liquid including the pigment and an active ray polymerizable compound and then mix the pigment dispersion liquid with other components. The pigment dispersion liquid may further contain a dispersing agent.

The pigment dispersion liquid can be prepared by dispersing a pigment in an active ray polymerizable compound. The pigment may be dispersed using, for example, a ball mill, a sand mill, an attritor, a roll mill, an agitator, a Henschel mixer, a colloid mill, an ultrasonic homogenizer, a pearl mill, a wet jet mill, or a paint shaker. At this time, a dispersing agent may be added.

Note that in a case of using a plurality of types of active ray polymerizable compounds, the active ray polymerizable compounds may be mixed in advance to produce an active ray polymerizable composition, and then the active ray polymerizable composition, the gelling agent, and any other components may be mixed under heating.

### 2. Image Forming Method

Fig. 1 is a flowchart illustrating an image forming method according to the present embodiment. The image forming method according to the present embodiment includes a step of ejecting droplets of the above-described active ray curable inkjet ink from an inkjet head to apply the droplets onto a surface of a recording medium (step S10). The image forming method further includes a step of irradiating the applied droplets of the active ray curable inkjet ink with active rays to cure the droplets (step S20).

### 2-1. Step of Applying Active Ray Curable Inkjet Ink to Recording Media (step S10)

In this step, the above-described active ray curable inkjet ink is ejected from an inkjet head and applied to the surface of the recording medium (at a position corresponding to an image to be formed).

The method of ejection from the inkjet head may be either an on-demand method or a continuous method. The inkjet head of the on-demand system may be of an electromechanical conversion system, such as a single cavity type, a double cavity type, a bender type, a piston type, a share mode type, and a shared wall type. In addition, an electrothermal conversion system such as a thermal inkjet type and a bubble jet ("bubble jet" is a registered trademark of Canon Inc) type may be used. In addition, the inkjet head may be either a scan type or a line type inkjet head.

Droplets of the active ray curable ink are ejected from an inkjet head in a state of being heated and turned into a sol. Therefore, the temperature of the ink when filled in the inkjet head is preferably set to be equal to or higher than the gelation temperature of the ink + 10°C and equal to or lower than the gelation temperature + 30°C. When the temperature of the ink in the inkjet head is equal to or higher than the gelation temperature + 10°C, a decrease in ejection properties due to gelation of the ink in the inkjet head or on the nozzle surface is less likely to occur. On the other hand, when the temperature of the ink in the inkjet head is the gelation temperature + 30°C or less, deterioration of the components due to a high temperature is less likely to occur.

The method for heating the active ray curable inkjet ink is not particularly limited. An ink supply system such as an ink tank constituting the head carriage, a supply pipe, and a front chamber ink tank immediately before the head, a pipe with a filter, a piezo head, and the like may be heated. The heating can be performed with a panel heater, a ribbon heater, heat-retaining water, and the like.

The ejected droplet amount of the active ray curable inkjet ink is preferably 2pL or more and 20pL or less from the viewpoint of further increasing the recording speed and image quality.

The recording medium is not particularly limited, and in addition to normal non-coated paper and coated paper, synthetic paper YUPO ("YUPO" is a registered trademark of YUPO CORPORATION), various plastics used for flexible packaging, and films thereof can be used. Examples of the various types of plastic films include PP films, PET films, OPS films, OPP films, ONy films, PVC films, PE films, and TAC films. As other plastics, polycarbonate, (meth)acrylic resin, ABS, polyacetal, PVA, rubber, and the like can be used.

The application of the active ray curable inkjet ink to the recording medium may be performed by landing the ejected ink as it is on the recording medium. Alternatively, the ejected ink may be landed on an intermediate transfer member to form an intermediate image, and the intermediate image may be transferred and applied from the intermediate transfer member to a recording medium.

### 2-2. Step of Curing Active Ray Curable Inkjet Ink (Step S20)

In this step, the droplets of the active ray curable inkjet ink applied to the recording medium in step S10 are cured by irradiation with active rays. Thus, an image formed of a cured film of the active ray curable inkjet ink is formed.

The active rays can be selected from for example, electron beams, ultraviolet rays, α rays, γ rays, and X-rays, and is preferably ultraviolet rays or electron beams. The ultraviolet rays are preferably light having peak wavelengths in a range of 360 nm to 410 nm inclusive. Furthermore, the ultraviolet rays are preferably emitted from an LED light source. An LED emits less radiant heat than a conventional light source (e.g., a metal halide lamp). Therefore, the LED is less likely to dissolve an ink when irradiated with active rays, and therefore, gloss unevenness and the like are less likely to occur.

### 3. Image Forming Apparatus

An image forming apparatus 100 capable of carrying out the above-described image forming method will be described below.

Fig. 2 is a schematic diagram illustrating a configuration of the image forming apparatus 100 according to the present embodiment. As illustrated in Fig. 2, the image forming apparatus 100 includes an inkjet head 110, a conveyance section 120, and an irradiation section 130. Note that in Fig. 2, an arrow indicates a conveyance direction of a recording medium.

The inkjet heads 110 have a nozzle face 113 provided with ejection ports of nozzles 111, on the surface facing the conveyance section 120 during image formation, and eject the active ray curable inkjet ink onto the recording medium 200 conveyed by the conveyance section 120. From the viewpoint of enhancing the ejection properties of the active ray curable inkjet ink, the inkjet head 110 may have a temperature adjustment means for adjusting the temperature of the ink to adjust the ink to have a low viscosity. Examples of the temperature adjusting means include heating means using a panel heater, a ribbon heater, and heat-retaining water.

The inkjet head 110 may be a scan type inkjet head in which the width in the direction orthogonal to the conveyance direction of the recording medium is smaller than the recording medium 200, or may be a line type inkjet head in which the width in the direction orthogonal to the conveyance direction of the recording medium is larger than the recording medium 200.

The nozzle 111 includes an ejection port in a nozzle surface 113. The number of nozzles 111 may be equal to or greater than the number of inks used for image formation (for example, four).

The conveyance section 120 conveys the recording medium 200 so that the recording medium 200 facing the inkjet head 110 moves directly below the inkjet head 110 in the vertical direction when an image is formed. For example, the conveyance section 120 includes a driving roller 121, a driven roller 122, and a conveyance belt 123.

The irradiation section 130 irradiates the upper surface of the conveyance section 120 with active rays. As a result, the droplets of the active ray curable inkjet ink that have landed on the conveyed recording medium 200 can be cured by irradiation with active rays. The irradiation section 130 can be disposed immediately above the conveyance section 120 on the downstream side of the inkjet head 110.

In addition to the above-described components, the image forming apparatus 100 may include an ink tank (not illustrated) for storing the active ray curable ink before ejection, an ink flow path (not illustrated) that allows the ink tank and the inkjet head 110 to communicate with each other so that the ink can flow therethrough, and a controller (not illustrated) that controls the operation of the inkjet head 110, the conveyance section 120, and the irradiation section 130.

Furthermore, the image forming apparatus 100 may include an intermediate transfer member and a transfer section (both not illustrated). At this time, the inkjet heads 110 eject the active ray curable inkjet ink onto the intermediate transfer member so that the ink lands on the surface of the intermediate transfer member, to form an intermediate image on the surface of the intermediate transfer member, the intermediate image being formed by aggregation of droplets of the active ray curable inkjet ink. Thereafter, the transfer section transfers the intermediate image from the surface of the intermediate transfer member to the surface of the recording medium. Then, the irradiation section 130 irradiates the intermediate image transferred onto the surface of the recording medium with active rays to cure the liquid droplets of the active ray curable inkjet ink.

### Examples

In the following, the present invention will be described with reference to an example. The scope of the present invention should not be construed as being limited to the examples.

### 1. Preparation and Synthesis of Materials

The materials used for preparing the active ray curable inkjet ink are described below.

### 1-1. Pigment Dispersion Liquid

Nine parts by mass of a pigment dispersing agent (EFKA-7701, manufactured by BASF) and 71 parts by mass of tripropylene glycol diacrylate were placed in a stainless steel beaker, and the mixture was heated and stirred for 1 hour while being heated to 65°C on a hot plate. Next, the mixture was cooled to room temperature, and 20 parts by mass of cyan pigments (Pigment Blue 15:4, Chromofine Blue 6332JC, manufactured by Dainichiseika Color & Chemicals Mfg. Co., Ltd) were added thereto, and then the mixture was placed in a glass bottle together with 200 g zirconia beads (0.3 mm, manufactured by NIKKATO CORPORATION), and the glass bottle was sealed. This pigment-containing liquid was subjected to dispersion treatment using a paint shaker, and then the zirconia beads were removed to obtain a pigment dispersion liquid. Note that the time for the dispersion treatment was 4 hours when the cyan pigment and the black pigment were used, and 6 hours when the magenta pigment and the yellow pigment were used.

### 1-2. Active Ray Polymerizable Compound

### (Monofunctional active ray polymerizable compound)

m1: 2EO modified phenol acrylate (having a benzene ring and the number of EO groups of 2)
m2: 4EO modified phenol acrylate (having a benzene ring and the number of EO groups of 4)
m3: 4EO modified nonylphenol acrylate (having a benzene ring and the number of EO groups of 4)
m4: 8EO modified nonylphenol acrylate (having a benzene ring and the number of EO groups of 8)
m5: 2PO modified nonylphenol acrylate (having a benzene ring and the number of PO groups of 2)
m6: 2-Phenoxyethyl acrylate (having a benzene ring and the number of EO groups of 1)
m7: Lauryl acrylate
m8: Caprolactone acrylate

### (Polyfunctional active ray polymerizable compound)

M1: 10EO modified bisphenol A diacrylate (having a benzene ring and the number of EO groups of 10)
M2: Tripropylene glycol diacrylate (the number of PO groups of 3)
M3: polyethylene glycol diacrylate #400 (the number of EO groups of 9)
M4: 3EO modified trimethylolpropane triacrylate (the number of EO groups of 3)
M5: 6EO modified trimethylolpropane triacrylate (the number of EO groups of 6)
M6: Dioxane glycol diacrylate
M7: 2EO modified 1,6-hexanediol diacrylate (the number of EO groups of 2)
M8: 3EO modified trimethylolpropane triacrylate (the number of EO groups of 3)
M9: 2PO modified neopentyl glycol diacrylate (the number of EO groups of 2)
M10: (2,4,6-Trioxo-1, 3,5-triazinane-1, 3,5-triyl) tris (ethane-2,1-diyl) triacrylate
M11: Octafunctional multi-branched acrylate (manufactured by Eternal Materials, ETERCURE 6361-100, the number of EO groups of 9).
M12: Bifunctional polyester acrylate oligomer (manufactured by Arkema, CN2270NS, the number of PO groups of 5)
M13: 9EO modified trimethylolpropane triacrylate (the number of EO groups of 9)
M14: Polyethylene glycol diacrylate #600 (the number of EO groups of 14)
M15: 3EO modified trimethylolpropane triacrylate (the number of EO groups of 3)
M16: 3PO modified glyceryl triacrylate

### 1-3. Gelling Agent

- G1: Stearyl stearate (ester based, maximum carbon number of hydrocarbon group: 18)
- G2: Behenyl behenate (ester based, maximum carbon number of hydrocarbon group: 22)
- G3: Stearone (ketone based, maximum carbon number of hydrocarbon group: 17)
- G4: Pentaerythritol tetrastearate (pentaerythritol based, maximum carbon number of hydrocarbon group: 17)
- G5: Glycerin monolaurate (glycerol based, maximum carbon number of hydrocarbon group: 11)

### 1-4. Active Ray Polymerization Initiator

- Initiator 1 (Omnirad 819, manufactured by IGM Resins B.V.)
- Initiator 2 (Speedcure 2 -ITX, manufactured by Arkema)

### 1-5. Polymerization Inhibitor

Irgasutab UV-10 (manufactured by BASF)

### 1-6. Surfactant

KF-352A (manufactured by Shin - Etsu Chemical Co., Ltd)

### 2. Preparation of Active Ray Curable Inkjet Ink

Into a stainless steel beaker, 12.0 parts by mass of the cyan pigment dispersion liquid, 25.0 parts by mass of the active ray polymerizable compound m1, 10.0 parts by mass of the active ray polymerizable compound M2, 8.5 parts by mass of the active ray polymerizable compound M3, 13.0 parts by mass of the active ray polymerizable compound M4, 17.3 parts by mass of the active ray polymerizable compound M5, 5.5 parts by mass of the active ray polymerizable compound M7, 5.0 parts by mass of the gelling agent 1, 3.0 parts by mass of the initiator 1, 0.5 parts by mass of the initiator 2, 0.1 parts by mass of a polymerization inhibitor, and 0.1 parts by mass of a surfactant were placed and stirred at 105°C for 45 minutes. Thereafter, the mixture was filtered through a Teflon (registered trademark) 3 µm membrane filter produced byADVANTEC GmbH, to obtain an active ray curable inkjet ink 1. Active ray curable inkjet inks 2 to 47 were obtained in the same manner except that the type and amount of the active ray polymerizable compound used and the type and amount of the gelling agent used were changed as illustrated in Tables 1 to 5 (numerical values in the tables are parts by mass).

### 3. Evaluation

### (Solubility of gelling agent)

A container containing each active ray curable inkjet ink 10 mL was placed in an oven heated to 80°C, the container was taken out from the oven after 10 minutes or 30 minutes, and the ink in the container was observed. The solubility of the gelling agent was evaluated according to the following evaluation criteria.

### (Evaluation criterion)

⊚: At the time when 10 minutes elapsed after the container was placed in the oven, any insoluble matter or oil droplet separation was not observed.
∘: At the time when 10 minutes elapsed after the container was placed in the oven, undissolved gelling agent or oil droplet separation was slightly observed, but at the time when 30 minutes elapsed, any insoluble matter or oil droplet separation was not observed.
△: At the time when 30 minutes elapsed after the container was placed in the oven, an undissolved gelling agent or oil droplet separation was slightly observed.
×: At the time when 30 minutes elapsed after the container was placed in the oven, the gelling agent remained without being dissolved or oil droplet separation was observed.

### (Gelation (thickening) property)

A heat-resistant tube containing each active ray curable inkjet ink 10 mL was heated to 35°C, and the gelled state of each ink in the container was confirmed. The gelation property was evaluated according to the following evaluation criteria.
⊚: The gel did not crumble after shaking the heat-resistant tube 10 times.
∘: The gel did not crumble after shaking the heat-resistant tube five times, but the gel crumbled after shaking the tube six to ten times.
△: The gel did not crumble after shaking the heat-resistant tube four times, but the gel crumbled after shaking the tube five times.
×: The gel crumbled after shaking the heat-resistant tube one to three times.

The evaluation results are summarized in Tables 6 and 7.

**[Table 1]**

| Ink No | | | | | 1 | 2 | 3 | 4 | 5 | 6 | 7 | 8 | 9 | 10 |
|---|---|---|---|---|---|---|---|---|---|---|---|---|---|---|
| | | Benzene ring (present) | m1 | EO:2 | 25.0 | | | 10.0 | | | | | | |
| | | | m2 | EO:4 | | 20.0 | | | 10.0 | | | 15.0 | | |
| | Monofunctional | | m3 | EO:4 | | | 20.0 | 10.0 | 10.0 | | 20.0 | 5.0 | | 20.0 |
| | | | m4 | EO:8 | | | | | | | | | 20.0 | |
| | | | m5 | PO:2 | | | | | | | | 5.0 | | |
| | | Benzene ring (present) | M1 | EO:10 | | | | | | 20.0 | | | | |
| Active ray polymerizable compound | | | M2 | PO:3 | 10.0 | 20.5 | 20.5 | | 20.5 | | 20.5 | 15.5 | 20.5 | 20.5 |
| | | | M3 | EO:9 | 8.5 | | 8.5 | | 8.5 | 8.5 | 8.5 | 8.5 | 8.5 | 8.5 |
| | | | M4 | EO:3 | 13.0 | 13.0 | 13.0 | | 10.3 | | 10.0 | 8.0 | 13.0 | 13.0 |
| | Multifunctional | | M5 | EO:6 | 17.3 | 17.3 | 17.3 | 17.3 | 15.0 | | 17.3 | 17.3 | 17.3 | 17.3 |
| | | Benzene ring (absent) | M6 | | | | | 13.0 | | 17.3 | | | | |
| | | | M7 | EO:2 | 5.5 | | | 20.5 | | 20.5 | | | | |
| | | | M8 | EO:3 | | 8.5 | | 8.5 | | 3.0 | | 5.0 | | |
| | | | M9 | EO:2 | | | | | | 10.0 | | | | |
| | | | M10 | | | | | | 5.0 | | | | | |
| Gelling agent | | Ester based | G1 | C18 | 5.0 | 5.0 | 5.0 | 5.0 | 5.0 | 5.0 | 8.0 | 3.0 | 4.0 | |
| | | | G2 | C22 | | | | | | | | 2.0 | | |
| | | Ketone based | G3 | C17 | | | | | | | | | 1.0 | |
| | | Pentaerythritol based | G4 | C18 | | | | | | | | | | 5.0 |
| Photopolymerization initiator | | | Initiator 1 | | 3.0 | 3.0 | 3.0 | 3.0 | 3.0 | 3.0 | 3.0 | 3.0 | 3.0 | 3.0 |
| | | | Initiator 2 | | 0.5 | 0.5 | 0.5 | 0.5 | 0.5 | 0.5 | 0.5 | 0.5 | 0.5 | 0.5 |
| Photopolymerization inhibitor | | | | | 0.1 | 0.1 | 0.1 | 0.1 | 0.1 | 0.1 | 0.1 | 0.1 | 0.1 | 0.1 |
| Surfactant | | | | | 0.1 | 0.1 | 0.1 | 0.1 | 0.1 | 0.1 | 0.1 | 0.1 | 0.1 | 0.1 |
| Pigment dispersion liquid | | | | | 12.0 | 12.0 | 12.0 | 12.0 | 12.0 | 12.0 | 12.0 | 12.0 | 12.0 | 12.0 |

**[Table 2]**

| Ink No | | | | | 11 | 12 | 13 | 14 | 15 | 16 | 17 | 18 | 19 | 20 | 21 | 22 |
|---|---|---|---|---|---|---|---|---|---|---|---|---|---|---|---|---|
| | Monofunctional | Benzene ring (present) | m1 | EO:2 | 5.0 | | | | | | | | 5.0 | | | |
| | | | m2 | EO:4 | 5.0 | 15.0 | 3.0 | 5.0 | | | | | | | | 24.0 |
| | | | m3 | EO:4 | | 10.0 | | | 20.0 | 30.0 | | | 10.0 | | 20.0 | 24.0 |
| | | | m4 | EO:8 | 10.0 | | | 15.0 | | | 25.0 | 10.0 | 10.0 | | | |
| | | | m5 | PO:2 | | | 5.0 | | | | | 10.0 | | 15.0 | | |
| | | Benzene ring (present) | M1 | EO:10 | | | | | | 5.0 | | | | 10.0 | | |
| Active ray polymerizable compound | | | M2 | PO:3 | 20.5 | 17.3 | 19.3 | 5.0 | 5.0 | 5.0 | | 5.0 | | 5.0 | 20.5 | 5.5 |
| | | | M3 | EO:9 | 8.5 | 15.0 | 10.0 | 10.0 | 10.0 | 5.5 | | 10.0 | 20.0 | 5.0 | 8.5 | 3.5 |
| | | | M4 | EO:3 | 13.0 | | 15.0 | | | | 5.0 | | | | 13.0 | 8.0 |
| | Multifunctional | | M5 | EO:6 | 17.3 | 10.0 | 15.0 | | | 6.0 | 4.3 | | 8.0 | | 17.3 | 6.3 |
| | | Benzene ring (absent) | M6 | | | | | 9.3 | 9.3 | | | 9.3 | | 9.3 | | |
| | | | M7 | EO:2 | | | | 20.0 | 20.0 | 8.8 | | 20.0 | | 20.0 | | |
| | | | M8 | EO:3 | | 10.0 | 10.0 | 15.0 | 15.0 | | 23.0 | 12.0 | | 15.0 | | 8.0 |
| | | | M9 | EO:2 | | 2.0 | | | | 20.0 | 22.0 | | 7.3 | | | |
| | | | M10 | | | | 2.0 | | | | | 3.0 | 20.0 | | | |
| Gelling agent | | Ester based | G1 | C18 | 3.0 | 3.0 | 3.0 | 5.0 | 5.0 | 2.0 | | 4.0 | 2.0 | 5.0 | | 5.0 |
| | | | G2 | C22 | | 2.0 | 2.0 | | | 1.0 | 3.0 | 1.0 | 2.0 | | | |
| | | Ketone based | G3 | C17 | 2.0 | | | | | | 2.0 | | | | | |
| | | Pentaerythritol based | G4 | C18 | | | | | | | | | | | 5.0 | |
| Photopolymerization initiator | | | Initiator 1 | | 3.0 | 3.0 | 3.0 | 3.0 | 3.0 | 3.0 | 3.0 | 3.0 | 3.0 | 3.0 | 3.0 | 3.0 |
| | | | | Initiator 2 | 0.5 | 0.5 | 0.5 | 0.5 | 0.5 | 0.5 | 0.5 | 0.5 | 0.5 | 0.5 | 0.5 | 0.5 |
| Photopolymerization inhibitor | | | | | 0.1 | 0.1 | 0.1 | 0.1 | 0.1 | 0.1 | 0.1 | 0.1 | 0.1 | 0.1 | 0.1 | 0.1 |
| Surfactant | | | | | 0.1 | 0.1 | 0.1 | 0.1 | 0.1 | 0.1 | 0.1 | 0.1 | 0.1 | 0.1 | 0.1 | 0.1 |
| Pigment dispersion liquid | | | | | 12.0 | 12.0 | 12.0 | 12.0 | 12.0 | 12.0 | 12.0 | 12.0 | 12.0 | 12.0 | 12.0 | 12.0 |

**[Table 3]**

| Ink No | | | | | 23 | 24 | 25 | 26 | 27 | 28 | 29 |
|---|---|---|---|---|---|---|---|---|---|---|---|
| | Monofunctional | Benzene ring (present) | m1 | EO:2 | | | | 13.0 | 5.0 | | 4.0 |
| | | | m2 | EO:4 | 5.0 | 4.0 | 5.5 | | | | |
| | | | m3 | EO:4 | 7.5 | 16.5 | 5.5 | | | | |
| | | | m5 | PO:2 | | | | | 4.0 | | |
| | Multifunctional | Benzene ring (present) | M1 | EO:10 | | | | | 5.0 | 20.0 | 8.0 |
| Active ray polymerizable compound | | Benzene ring (absent) | M2 | PO:3 | 11.3 | 11.8 | 12.8 | 20.3 | 24.0 | 20.3 | 12.3 |
| | | | M11 | EO:9 | | 1.5 | | 8.0 | | 3.0 | 10.0 |
| | | | M12 | PO:5 | 10.0 | | 9.0 | | 14.3 | | |
| | | | M13 | EO:9 | 20.0 | | 21.5 | | 10.5 | | 8.0 |
| | | | M14 | EO:14 | 15.0 | 10.0 | 11.0 | | | | |
| | | | M15 | PO:3 | | 17.5 | | 10.0 | | 18.0 | 15.0 |
| | | | M16 | PO:3 | 12.5 | 20.0 | 16.0 | 30.0 | 18.5 | 20.0 | 24.0 |
| Gelling agent | | Ester based | G1 | C18 | 2.0 | 2.0 | 2.0 | 2.0 | 2.0 | 2.0 | 2.0 |
| | | | G2 | C22 | 1.0 | 1.0 | 1.0 | 1.0 | 1.0 | 1.0 | 1.0 |
| Photopolymerization initiator | | | Initiator 1 | | 3.0 | 3.0 | 3.0 | 3.0 | 3.0 | 3.0 | 3.0 |
| | | | Initiator 2 | | 0.5 | 0.5 | 0.5 | 0.5 | 0.5 | 0.5 | 0.5 |
| Photopolymerization inhibitor | | | | | 0.1 | 0.1 | 0.1 | 0.1 | 0.1 | 0.1 | 0.1 |
| Surfactant | | | | | 0.1 | 0.1 | 0.1 | 0.1 | 0.1 | 0.1 | 0.1 |
| Pigment dispersion liquid | | | | | 12.0 | 12.0 | 12.0 | 12.0 | 12.0 | 12.0 | 12.0 |

**[Table 4]**

| Ink No | | | | | 30 | 31 | 32 | 33 | 34 | 35 | 36 | 37 | 38 | 39 | 40 | 41 |
|---|---|---|---|---|---|---|---|---|---|---|---|---|---|---|---|---|
| | Monofunctional | Benzene ring (present) | m1 | EO:2 | 8.0 | 3.0 | 8.0 | | | 13.0 | | | | | | |
| | | | m2 | EO:4 | 5.0 | | | | | | 10.0 | | 10.0 | 3.0 | | |
| | | | m3 | EO:4 | | | | | | | 10.0 | 10.0 | | | | 20.0 |
| | | | m4 | EO:8 | | | | | | | | 10.0 | | | 20.0 | |
| | | | m5 | PO:2 | | | | 5.0 | 20.0 | | | | | 5.0 | | |
| | | Benzene ring (present) | M1 | EO:10 | | 7.0 | 10.0 | | | | | | 5.0 | 10.0 | 10.0 | |
| | | | M2 | PO:3 | 10.3 | 10.3 | 10.3 | | | | 10.0 | 10.0 | 5.0 | 8.0 | 6.0 | 20.5 |
| Active ray polymerizable compound | | | M3 | EO:9 | | 8.0 | | 8.0 | 8.5 | | | | 5.0 | | | 8.5 |
| | | | M4 | EO:3 | 5.0 | | | | 13.0 | 10.0 | 10.0 | 10.0 | 5.0 | 10.0 | 5.0 | 13.0 |
| | | | M5 | EO:6 | | 10.0 | | 15.3 | 17.3 | 5.3 | 3.3 | 3.3 | 3.3 | 3.3 | 3.3 | 17.5 |
| | Multifunctional | | M6 | | | | | 10.0 | 10.0 | 10.0 | 10.0 | 10.0 | 10.0 | 10.0 | 5.0 | |
| | | | M7 | EO:2 | | | | | 2.5 | 5.0 | | | | | | |
| | | | M8 | EO:3 | | 5.0 | | 5.0 | | | 8.0 | 8.0 | 8.0 | 8.0 | 8.0 | |
| | | Benzene ring (absent) | M9 | EO:2 | | | 5.0 | | | 8.0 | 5.0 | 5.0 | 5.0 | | | |
| | | | M10 | | | | 10 | | | 15 | | | 5.0 | | | |
| | | | M11 | EO:9 | | 10.0 | 5.0 | 10.0 | 5.0 | | | | | 5.0 | 5.0 | |
| | | | M12 | PO:5 | 5.0 | 5.0 | 10.0 | 5.0 | 5.0 | 5.0 | | | | 5.0 | 5.0 | |
| | | | M13 | EO:9 | | 8.0 | 8.0 | 8.0 | | | | | 5.0 | | | |
| | | | M14 | EO:14 | 9.0 | 5.0 | 10.0 | 5.0 | | | | | | | | |
| | | | M15 | PO:3 | 15.0 | 5.0 | 5.0 | 5.0 | | 10.0 | 5.0 | 5.0 | 5.0 | 5.0 | 5.0 | |
| | | | M16 | PO:3 | 24.0 | 5.0 | | 5.0 | | | 10.0 | 10.0 | 10.0 | 9.0 | 9.0 | |
| Gelling agent | | Ester based | G1 | C18 | 2.0 | 2.0 | 2.0 | 2.0 | 2.0 | 2.0 | 2.0 | 2.0 | 2.0 | 2.0 | 2.0 | |
| | | | G2 | C22 | 1.0 | 1.0 | 1.0 | 1.0 | 1.0 | 1.0 | 1.0 | 1.0 | 1.0 | 1.0 | 1.0 | |
| | | Glycerol based | G5 | C11 | | | | | | | | | | | | 5.0 |
| Photopolymerization initiator | | | Initiator 1 | | 3.0 | 3.0 | 3.0 | 3.0 | 3.0 | 3.0 | 3.0 | 3.0 | 3.0 | 3.0 | 3.0 | 3.0 |
| | | | Initiator 2 | | 0.5 | 0.5 | 0.5 | 0.5 | 0.5 | 0.5 | 0.5 | 0.5 | 0.5 | 0.5 | 0.5 | 0.5 |
| Photopolymerization inhibitor | | | | | 0.1 | 0.1 | 0.1 | 0.1 | 0.1 | 0.1 | 0.1 | 0.1 | 0.1 | 0.1 | 0.1 | 0.1 |
| Surfactant | | | | | 0.1 | 0.1 | 0.1 | 0.1 | 0.1 | 0.1 | 0.1 | 0.1 | 0.1 | 0.1 | 0.1 | 0.1 |
| Pigment dispersion liquid | | | | | 12.0 | 12.0 | 12.0 | 12.0 | 12.0 | 12.0 | 12.0 | 12.0 | 12.0 | 12.0 | 12.0 | 12.0 |

**[Table 5]**

| Ink No | | | | | 42 | 43 | 44 | 45 | 46 | 47 |
|---|---|---|---|---|---|---|---|---|---|---|
| | Monofunctional | Benzene ring (present) | m3 | EO:4 | | | 5.0 | | | 20.0 |
| | | | m5 | PO:2 | | | | | 5.0 | |
| | | | m6 | EO:1 | 20.0 | | 15.0 | | | |
| | | Benzene ring (absent) | m7 | | | 20.0 | | | 10.0 | |
| Active ray polymerizable compound | | | m8 | | | | | 20.0 | | |
| | Multifunctional | Benzene ring (absent) | M2 | PO:3 | 20.5 | 25.0 | 20.5 | 15.5 | 25.5 | 20.5 |
| | | | M3 | EO:9 | 8.5 | 8.5 | 8.5 | 8.5 | 8.5 | 8.5 |
| | | | M4 | EO:3 | 13.0 | | | 10.0 | 13.0 | 13.0 |
| | | | M5 | EO:6 | 17.3 | 17.3 | 17.3 | 17.3 | 17.3 | 17.3 |
| | | | M7 | EO:2 | | | | 8.0 | | |
| | | | M8 | EO:3 | | 8.5 | 13.0 | | | |
| Gelling agent | | Ester based | G1 | C18 | 5.0 | 5.0 | 5.0 | 5.0 | 5.0 | |
| | | | G2 | C22 | | | | | | 5.0 |
| Photopolymerization initiator | | | Initiator 1 | | 3.0 | 3.0 | 3.0 | 3.0 | 3.0 | 3.0 |
| | | | Initiator 2 | | 0.5 | 0.5 | 0.5 | 0.5 | 0.5 | 0.5 |
| Photopolymerization inhibitor | | | | | 0.1 | 0.1 | 0.1 | 0.1 | 0.1 | 0.1 |
| Surfactant | | | | | 0.1 | 0.1 | 0.1 | 0.1 | 0.1 | 0.1 |
| Pigment dispersion liquid | | | | | 12.0 | 12.0 | 12.0 | 12.0 | 12.0 | 12.0 |

**[Table 6]**

| Remarks | Ink No | Evaluation | |
|---|---|---|---|
| | | Solubility | Gelation property |
| | 1 | ○ | ○ |
| | 2 | ○ | ⊚ |
| | 3 | ⊚ | ⊚ |
| | 4 | ⊚ | ⊚ |
| | 5 | ⊚ | ⊚ |
| | 6 | Δ | Δ |
| | 7 | ⊚ | ⊚ |
| | 8 | ⊚ | ⊚ |
| | 9 | ⊚ | ⊚ |
| | 10 | ⊚ | ○ |
| | 11 | ⊚ | ⊚ |
| | 12 | ⊚ | ⊚ |
| | 13 | ⊚ | Δ |
| | 14 | ⊚ | ⊚ |
| Example | 15 | ⊚ | ⊚ |
| | 16 | ⊚ | ⊚ |
| | 17 | ⊚ | ⊚ |
| | 18 | ⊚ | ⊚ |
| | 19 | ○ | ⊚ |
| | 20 | Δ | ○ |
| | 21 | Δ | ○ |
| | 22 | Δ | Δ |
| | 23 | ⊚ | ⊚ |
| | 24 | ⊚ | ⊚ |
| | 25 | ⊚ | ⊚ |
| | 26 | ○ | ○ |
| | 27 | ○ | ○ |
| | 28 | ○ | ○ |
| | 29 | ○ | ○ |

**[Table 7]**

| Remarks | Ink No | Evaluation | |
|---|---|---|---|
| | | Solubility | Gelation property |
| | 30 | Δ | ○ |
| | 31 | Δ | ○ |
| | 32 | Δ | ○ |
| | 33 | Δ | ○ |
| | 34 | Δ | ○ |
| | 35 | Δ | ○ |
| Example | 36 | ⊚ | ⊚ |
| | 37 | ⊚ | ⊚ |
| | 38 | Δ | ⊚ |
| | 39 | ⊚ | Δ |
| | 40 | Δ | ⊚ |
| | 41 | Δ | ○ |
| Comparative example | 42 | ○ | × |
| | 43 | × | × |
| | 44 | ○ | × |
| | 45 | × | × |
| | 46 | Δ | × |
| | 47 | × | × |

From the results of the inks 1 to 41 and inks 42 to 47, it was possible to increase the solubility of the gelling agent and sufficiently increase the gelation property of the ink by adding a gelling agent including a linear hydrocarbon group having 22 or less carbon atoms and a first polymerizable compound including a benzene ring and an EO group or a PO group with the total number of EO groups and PO groups of 2 or more.

In addition, from the results of the ink 2, it was found that when the ink included the first polymerizable compound in which the total number of the EO group and the PO group was 4 or more, the gelation property was further enhanced. Furthermore, it was found that when the ink included the first polymerizable compound including a hydrocarbon group in the molecule, the solubility of the gelling agent was further increased.

### Industrial Applicability

The inkjet ink according to the present invention can sufficiently increase the solubility of a gelling agent in the ink and the gelation property of the ink. Therefore, the present invention is useful in the field of image formation.

### Reference Signs List

100 Image forming apparatus
110 Inkjet head
120 Conveyance section
130 Irradiation section

Although embodiments of the present invention have been described and illustrated in detail, it is clearly understood that the same is by way of illustration and example only and not limitation, the scope of the present invention should be interpreted by terms of the appended claims.

## Claims

1. An inkjet ink that is cured by an active ray, comprises a gelling agent and a polymerizable compound that is polymerized by the active ray, and undergoes sol-gel phase transition by the gelling agent, wherein:
the polymerizable compound comprises a first polymerizable compound, wherein the first polymerizable compound includes a benzene ring and further includes one or more ethylene oxide groups and/or one or more propylene oxide groups in a molecule of the first polymerizable compound, and a total number of the ethylene oxide groups and the propylene oxide groups is 2 or more;
a content of the first polymerizable compound is more than 5% by mass based on a total mass of the inkjet ink; and
the gelling agent includes a linear or branched hydrocarbon group having 22 or less carbon atoms.

2. The inkjet ink according to claim 1, wherein the first polymerizable compound comprises a monofunctional polymerizable compound.

3. The inkjet ink according to claim 1 or 2, wherein the content of the first polymerizable compound is more than 5% by mass and 40% by mass or less based on the total mass of the inkjet ink.

4. The inkjet ink according to any one of claims 1 to 3, wherein the first polymerizable compound comprises a polymerizable compound in which a total number of the ethylene oxide groups or the propylene oxide groups in a molecule of the polymerizable compound is 4 or more.

5. The inkjet ink according to any one of claims 1 to 4, wherein the first polymerizable compound comprises a polymerizable compound including a linear or branched hydrocarbon group in a molecule of the polymerizable compound.

6. The inkjet ink according to any one of claims 1 to 5, wherein a content of the gelling agent is 0.5% by mass or more and 10.0% by mass or less based on the total mass of the inkjet ink.

7. The inkjet ink according to any one of claims 1 to 6, wherein the gelling agent is at least one compound selected from the group consisting of an aliphatic ketone, an aliphatic ester, a glycerol-based compound, and a pentaerythritol-based compound.

8. The inkjet ink according to any one of claims 1 to 7, wherein the gelling agent is an aliphatic ketone or an aliphatic ester.

9. The inkjet ink according to any one of claims 1 to 8, wherein the gelling agent is an aliphatic ester.

10. The inkjet ink according to any one of claims 1 to 9, further comprising a pigment.

11. An image forming method comprising:
ejecting the inkjet ink according to any one of claims 1 to 10 from an inkjet head to apply the inkjet ink to a surface of a recording medium; and
irradiating the applied inkjet ink with an active ray to cure the inkjet ink.
